# FASCICULE DE BREVET EUROPEEN

(11) **EP 1 459 580 B1**
(45) Date de publication et mention de la délivrance du brevet: **26.04.2006**
(21) Numéro de dépôt: 02799848.3
(22) Date de dépôt: 23.12.2002
(51) Int. Cl.: H04Q 7/32, H04B 7/005, H04Q 7/22

(54) **Procdé de transmission de donnéees dans un réseau de communication cellulaire, système terminal et station de base correspondants**
Verfahren um Daten ein einem Mobilfunknetz zu übertragen, sowie entsprechende System, Endgerät und Basisstation
Data transmission method in a cellular communication network, corresponding system, terminal and base station

(30) Priorité: 28.12.2001 FR 0117056
(43) Date de publication de la demande: 22.09.2004
(73) Titulaire: Wavecom, 92442 Issy les Moulineaux Cedex (FR)
(72) Inventeur: BASSOMPIERE, Antoine, F-75014 Paris (FR); GOUDARD, Nathalie, F-92400 Courbevoie (FR)
(74) Mandataire: Vidon, Patrice
(86) Numéro de dépôt international: PCT/FR2002/004542
(87) Numéro de publication internationale: WO 2003/056860

(56) Documents cités:
- EP-A- 1 098 456
- WO-A-01/58189
- FR-A- 2 777 407
- US-A- 5 446 756

## Description

La présente invention se rapporte au domaine des communications radio. Plus précisément, l'invention concerne la transmission et le traitement de données dans un réseau par exemple cellulaire, en particulier à des débits élevés.

Les systèmes de radiotéléphonie de troisième génération, et les suivants, prennent ou prendront en compte de nombreux services et applications supposant la transmission de données à des débits très élevés. Les ressources allouées aux transferts de données (par exemple des fichiers contenant du son et/ou des images fixes ou animées), notamment via un réseau Internet ou des réseaux similaires, représenteront une part prépondérante de la ressource disponible et seront probablement supérieures, à terme, aux ressources allouées aux communications vocales, qui devraient rester sensiblement constantes.

Cependant, le débit total offert aux utilisateurs d'équipement de radiotéléphonie est limité par le nombre de fréquences disponibles. Afin de permettre une disponibilité suffisante des ressources, on a traditionnellement recours, notamment, à une densification des cellules sur un territoire donné. On crée ainsi une infrastructure de réseau divisée en « micro-cellules » qui sont des cellules de relativement petite taille. Un inconvénient de cette technique est qu'elle nécessite une multiplication des stations fixes (station de base ou BS de l'anglais « Base Station »), qui sont des éléments relativement complexes et coûteux. En outre, le débit de données possible, quoique élevé, n'est pas optimal. De plus, au niveau supérieur, il est clair que plus il y a de cellules, donc de stations fixes, plus la gestion est complexe.

Les réseaux de troisième génération UMTS (de l'anglais « Universal Mobile Telecommunication System » ou « Système de Télécommunication Mobile Universel ») ont également une capacité limitée par les interférences entre cellules ou réseaux voisins. Aussi, afin d'éviter des interférences trop importantes, les stations de bases mettent en oeuvre un contrôle de la puissance d'émission à partir d'indications émises par un terminal récepteur.

Par ailleurs, les systèmes de troisième génération en cours de développement reposent, tout comme les systèmes de radiotéléphonie existants, sur une structure asymétrique. Ainsi, le standard UMTS défini par le projet 3GPP (de l'anglais « Third Generation Partnerchip Project » ou « Projet de partenariat de troisième génération ») prévoit, pour le lien principal FDD (de l'anglais « Frequency Division Duplex » ou « duplex par répartition de fréquence »), une répartition symétrique entre la voie descendante (station de base vers terminal) et la voie montante (terminal vers station de base). Il existe également un lien TDD (de l'anglais « Time Division Duplex » ou « duplex par répartition de temps ») permettant une certaine asymétrie. Cependant, l'asymétrie ainsi offerte est limitée face aux besoins des utilisateurs en services haut débit de type Internet, avec ou sans mobilité, sur la voie descendante.

Une solution consiste alors à utiliser, conjointement au W-CDMA (de l'anglais « Wide-Code Division Multiple Access » ou « Accès Multiple par répartition de code à large bande ») des modulations multi-porteuses. On peut, par exemple, introduire un canal OFDM (de l'anglais « Orthogonal Frequency Division Multiplex » ou « Multiplexage par division orthogonale des fréquences ») descendant haut débit (tel que décrit notamment dans le brevet FR-98 04883 déposé le 10 avril 1998 par la société Wavecom) ou combiner un réseau UMTS avec des réseaux locaux sans fil (ou WLAN de l'anglais « Wireless Local Area Network ») haut débit existants ou à venir (notamment selon les normes HiperLAN/2 de l'ETSI ou IEEE 802.11).

Comme pour un système utilisant du CDMA, une même fréquence peut être réutilisée plus d'une fois pour un système basé sur une modulation OFDM. Ainsi, si deux cellules voisines sont à la même fréquence (notamment lorsqu'on dispose d'une ressource en fréquence limitée), il y aura des interférences inter-cellulaires : ainsi, un terminal situé dans une cellule à une fréquence f1 sera perturbé par les signaux émis sur une cellule voisine à la même fréquence f1. Le terminal recevra alors des signaux OFDM, provenant de deux stations de base, décalés dans le temps. L'orthogonalité entre sous-porteuses OFDM n'étant alors plus garantie, le terminal ne sera plus en mesure de démoduler correctement l'information lui étant destinée.

Dans les réseaux sans fil à hauts débits de type HiperLAN/2 (qui utilise notamment une modulation de type OFDM), on dispose de plus de vingt canaux, ce qui permet d'éviter, à l'aide d'un mécanisme d'allocation dynamique de fréquence, d'avoir des cellules voisines à la même fréquence. Néanmoins, cette technique présente l'inconvénient d'être relativement complexe à mettre en oeuvre.

Par ailleurs, l'utilisation d'un schéma unidirectionnel à deux bandes dans un système de communication cellulaire mettant en oeuvre au moins deux réseaux cellulaires, dont un réseau unidirectionnel, est connue du document WO 01/58189, déposé au nom de Nortel Networks Limited. Cependant, un inconvénient majeur de cette technique est qu'elle nécessite l'utilisation d'un canal montant spécial pour transporter certaines informations de contrôle du réseau unidirectionnel d'un équipement utilisateur vers un réseau bidirectionnel.

L'invention selon ses différents aspects a notamment pour objectif de pallier ces inconvénients de l'art antérieur.

Plus précisément, un premier objectif de l'invention est d'optimiser la transmission de données en permettant notamment une augmentation globale des débits dans un ou plusieurs réseaux couvrant une même zone géographique ou des zones voisines.

Un second objectif de l'invention est de permettre d'optimiser le transfert de données d'un terminal vers une station de base ne comprenant pas nécessairement de canal montant.

Dans ce but, l'invention propose un procédé de transmission de données dans un réseau de communication radio comprenant :
- au moins une station de base ; et
- au moins un terminal adapté à transmettre isolément et périodiquement à une des au moins une station de base, dite première station de base, des informations binaires sur un canal radio montant (TPC),
remarquable en ce que le canal radio porte:
- des premières informations permettant une commande de puissance d'émission de la première station de base ; et
- des secondes informations destinées à une autre finalité que la commande de puissance de la première station de base;
lesdites secondes informations étant insérées parmi lesdites premières informations.

Selon une caractéristique particulière, le procédé est remarquable en ce que la première station de base gère au moins une cellule de réseau de télécommunication mobile.

Ainsi, l'invention peut être mise en oeuvre dans les réseaux de télécommunication mobile tel que le réseau UMTS sans modification notable des spécifications des standards existants.

Selon une caractéristique particulière, le procédé est remarquable ce que la première station de base transmet à un équipement de communication apte à transmettre des données au terminal, au moins une partie des secondes informations reçues et en ce que l'équipement de communication met en oeuvre un traitement d'au moins une partie des secondes informations.

Selon une caractéristique particulière, le procédé est remarquable en ce que lorsque l'équipement de communication est en communication avec le terminal, il ajuste une puissance d'émission radio de données à destination du terminal en fonction du résultat du traitement.

Selon une caractéristique particulière, le procédé est remarquable en ce que l'équipement de communication communique avec le terminal sur un canal unidirectionnel permettant la transmission de données de l'équipement de communication vers le terminal.

Selon une caractéristique particulière, le procédé est remarquable en ce que l'équipement de communication est adapté à émettre des données en utilisant une modulation à porteuses multiples (OFDM).

Selon une caractéristique particulière, le procédé est remarquable en ce que l'équipement de communication permet des communications selon un protocole compatible avec la norme HIPERLAN/2 et/ou IEEE 802.11.

Selon une caractéristique particulière, le procédé est remarquable en ce que l'équipement est une station de base distincte de la première station de base.

Selon une caractéristique particulière, le procédé est remarquable en ce que l'équipement est un terminal.

Ainsi, l'invention peut être appliquée au cas où l'équipement de communication ne dispose pas d'un canal montant, cet équipement étant, par exemple, une seconde station de base de réseau UMTS, HIPERLAN, IEEE 802.11 (notamment IEEE 802.11a ou 802.11b) ou de tout autre réseau, un terminal (utilisé par exemple pour une transmission directe vers un autre terminal ou comme relais) ou plus généralement à un équipement tiers destiné à transmettre des données vers le terminal.

Selon une caractéristique particulière, le procédé est remarquable en ce que l'autre finalité comprend un contrôle de puissance d'émission d'une station de base distincte de la première station de base.

Selon une caractéristique particulière, le procédé est remarquable en ce que l'autre finalité comprend un acquittement de données transmises par une station de base au terminal sur un canal radio, l'acquittement indiquant que les données ont été ou n'ont pas été reçues correctement par le terminal.

Ainsi, l'invention permet un acquittement des données reçues correctement et/ou un acquittement par la négative indiquant que des données n'ont pas été reçues correctement.

Selon une caractéristique particulière, le procédé est remarquable en ce que l'autre finalité fait partie du groupe comprenant :
- les transmissions de données à destination d'une station de base distincte de la première station de base ;
- les gestions d'un asservissement temporel entre une station de base et le terminal ;
- les gestions d'un asservissement fréquentiel entre une station de base et le terminal ; et
- les contrôles de flux de données à destination et/ou en provenance du terminal.

Ainsi, de nombreuses utilisations de l'invention sont possibles, en particulier :
- le contrôle de la puissance d'émission d'une seconde station de base pour limiter les interférences ;
- les acquittements de trames émises par la station de base recevant le signal du canal montant (TPC) ou par une autre station de base permettant à la station émettrice des données de réagir très vite ;
- les gestions d'asservissement temporel et/ou fréquentiels permettant de compenser efficacement et de manière fiable et rapide les dérives temporelles et/ou fréquentielles sur les liens radios.

Ainsi, ces utilisations tirent partie du caractère très réactif du canal TPC qui permet une émission de données sur un canal montant dans des délais très courts.

Selon une caractéristique particulière, le procédé est remarquable en ce que la position des premières et secondes informations est prédéterminée.

Ainsi, la mise en oeuvre de l'invention est très simple.

Selon une caractéristique particulière, le procédé est remarquable en ce que la position des premières et secondes informations est déterminée dynamiquement.

De cette manière, tout en conservant une mise en oeuvre simple, l'invention permet d'adapter le nombre et la position des premières et secondes informations en fonction des contraintes liées au contrôle de puissance de la station réceptrice du canal montant et aux besoins liés aux autres finalités obtenues grâce aux secondes informations.

Selon une caractéristique particulière, le procédé est remarquable en ce que les secondes informations représentent au plus 10% des informations binaires.

Selon une caractéristique particulière, le procédé est remarquable en ce que les secondes informations représentent au plus 1% des informations binaires.

Ainsi, l'invention permet de conserver de bonnes performances pour le contrôle de puissance de la station recevant les données sur le canal TPC tout en permettant une transmission fiable et avec un délai court, des secondes informations.

L'invention concerne, en outre, un tenninal adapté à transmettre isolément et périodiquement à une station de base de réseau de communication radio, dite première station de base, des informations binaires sur un canal radio montant (TPC), remarquable en ce que le terminal comprend des moyens de distinction et d'insertion parmi les informations binaires:
- de premières informations permettant une commande de puissance d'émission de la première station de base ; et
- de secondes informations destinées à une autre finalité que la commande de puissance de la première station de base;
les secondes informations étant insérées parmi les premières informations.

L'invention concerne également une station de base de réseau cellulaire, adaptée à recevoir d'un terminal, isolément et périodiquement des informations binaires sur un canal radio montant (TPC), remarquable en ce que la station de base comprend des moyens de distinction et d'extraction parmi les informations binaires :
- de premières informations permettant une commande de puissance d'émission de la station de base ; et
- de secondes informations destinées à une autre finalité que la commande de puissance de la première station de base;
les secondes informations étant insérées parmi les premières informations.

De plus, l'invention concerne un système de communication, remarquable en ce qu'il comprend au moins un terminal et au moins une station de base tels que décrits précédemment.

L'invention concerne, en outre, un signal émis par un terminal vers une station de base de réseau de communication radio et portant des informations binaires transmises isolément et périodiquement par le terminal à la station de base sur un canal radio montant (TPC), remarquable en ce que les informations binaires comprennent :
- des premières informations permettant une commande de puissance d'émission de la station de base ; et
- des secondes informations destinées à une autre finalité que la commande de puissance de la station de base;
les secondes informations étant insérées parmi les premières informations.

Les avantages du terminal, de la station de base de réseau, du système et du signal sont les mêmes que ceux du procédé de transmission de données, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels:
- la figure 1 présente un synoptique de réseau conforme à l'invention selon un mode particulier de réalisation;
- la figure 2 décrit une station de base du réseau illustré dans la figure 1;
- la figure 3 décrit un terminal du réseau illustré dans la figure 1;
- la figure 4 illustre un protocole de communication entre différents élément du réseau de la figure 1; et
- la figure 5 présente une transmission de données par le terminal de la figure 3 vers les stations de base du réseau de la figure 1.

Le principe général de l'invention consiste à utiliser, un canal physique dédié à la transmission périodique de données binaires isolées pour transmettre des données destinées à une commande de puissance d'une station de base réceptrice et à une autre finalité.

Selon des techniques connues utilisées dans la norme UMTS, un mobile envoie 1500 fois par seconde une information de commande de puissance sur un canal particulier, dit TPC, afin que la station de base associée augmente ou diminue sa puissance d'émission.

Selon l'invention, on utilise certains bits du canal TPC (typiquement 1% et préférentiellement une quantité inférieure à 10% du nombre total des bits) non pas pour commander la puissance d'émission de la station de base recevant ce signal mais pour une autre finalité. Ainsi, le système UMTS ne se trouve alors que très faiblement dégradé car il reste typiquement 1485 bits (et préférentiellement 1350 bits) par seconde.

Selon une technique connue (mise en oeuvre notamment dans le standard UMTS), dite de mode compressé, des périodes d'inactivité (ou « gaps » en anglais) entraînent la suppression d'un nombre important de bits dédiés au contrôle de puissance d'une station de base. Dans ce cas, l'impact de l'utilisation du mode compressé sur le système UMTS reste cependant tolérable.

Selon l'invention, la suppression de certains bits ne dégradera que très faiblement, voire pas du tout, les performances du contrôle de puissance de la station de base réceptrice du signal correspondant.

La transmission de données par un terminal à une station de base sur un canal radio de type TPC utilisé pour transmettre périodiquement et isolément des données binaires parmi lesquelles des données destinées au contrôle de puissance de la station de base réceptrice et des données destinées à une autre finalité peut avoir de nombreuses applications avantageuses, par exemple :
- le contrôle de puissance d'une autre station ne disposant pas d'un canal montant de type TPC ; et
- les acquittements de données transmises par la station de base réceptrice du canal TPC ou une autre station de base et/ou terminal.

Ainsi, en transmettant via le canal TPC des données autres que celles destinées au contrôle de puissance de la station de base réceptrice, un terminal peut, par exemple, contrôler la puissance d'un système à base d'OFDM émettant des données à haut-débit vers le terminal, le système OFDM étant couplé à un réseau UMTS avec lequel le terminal communique. La fréquence du contrôle de puissance du système à base d'OFDM sera adaptée pour pénaliser faiblement voire pas du tout le contrôle de puissance de la station de base réceptrice.

Ainsi, pour limiter les interférences, la puissance des signaux OFDM émis est contrôlée en utilisant le mécanisme de contrôle de puissance de l'UMTS (W-CDMA). Ainsi, la puissance des signaux émis pour des terminaux proches d'une station de base OFDM sera plus faible que pour les terminaux éloignés de la station de base OFDM. L'originalité de l'invention repose alors sur l'utilisation du mécanisme de contrôle de puissance de l'UMTS pour contrôler la puissance des signaux OFDM émis.

En outre, grâce à ce contrôle de puissance d'émission, en cas de recouvrements de cellules à la même fréquence, la taille du recouvrement devrait être plus faible car les stations de base n'émettront pas d'énergie inutile. L'invention permet donc également de limiter les interférences inter-cellulaires pour ce cas spécifique (terminal dans une zone de recouvrement de cellules à la même fréquence).

Par ailleurs, l'invention présente l'avantage de conserver l'interface protocole UMTS existant, les bits du canal TPC ne transitant qu'entre les couches physiques. Le canal physique de type canal montant DPCCH, qui transporte le canal TPC, n'est pas modifié.

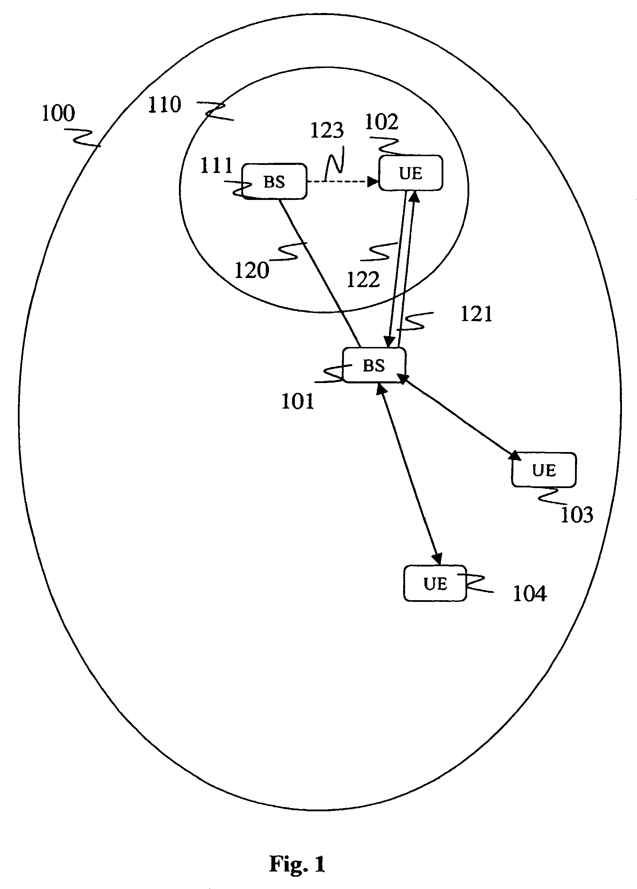

On présente, en relation avec la figure 1, un synoptique de réseau de radiotéléphonie mobile mettant en oeuvre l'invention.

Le réseau est par exemple un réseau compatible avec la norme UMTS(« Universal Mobile Télécommunication System ») définie par le comité 3GPP.

Le réseau comprend une cellule 100 (ou « macro-cellule ») qui est gérée par une station de base 101 (BS) mettant en oeuvre la norme UMTS.

La station de base 101 gère les communications des terminaux 103, 104 et 104 qui sont adaptés à communiquer avec la station de base 101 via des liaisons radio bidirectionnelles.

Ainsi, le terminal 102 est relié par un canal montant 122 et un canal descendant 121 à la station de base 101.

Par ailleurs, la cellule 100 englobe un réseau 110 de type HIPERLAN/2 permettant des transferts à haut débit.

La cellule 100 comprend notamment une station de base 111 compatible avec la norme HIPERLAN/2 qui, en communication, est reliée via une liaison 123 radio, unidirectionnelle et descendante, à haut débit au terminal 102.

La station de base 111 est également reliée via une liaison 120 bidirectionnelle quelconque, par exemple filaire à la station de base 101.

On note que, hors communication, les terminaux 102 à 104 sont en mode veille, c'est-à-dire dans un mode où les terminaux ne sont pas en mode communication mais présents et disponibles pour une communication dans la cellule 100. Ces terminaux sont notamment à l'écoute de signaux émis par la station de base 101 appartenant à la cellule 100.

Ces signaux sont émis sur :
- des canaux de transport communs correspondant aux services offerts vers les couches hautes du protocole de communication, notamment sur des canaux BCH (ou « canal de diffusion » de l'anglais « Broadcast CHannel ») et PCH (ou « canal de recherche de mobile » de l'anglais « Paging CHannel ») ; et
- des canaux de transport communs correspondants à la couche physique du protocole de communication, notamment sur des canaux CPICH (ou « canal commun pilote » de l'anglais « Common PIlot CHannel »).

Les canaux utilisés par les réseaux 3GPP sont bien connus de l'homme du métier des réseaux mobiles et sont notamment spécifiés dans la norme « 3^{rd} Generation Partnership Project ; Technical Specification Group Radio Access Network ; Physical Channels and mapping of transport channels onto physical channels (FDD) release 1999 » de référence 3GPP TS25.211 et diffusée par le bureau des publications de 3GPP. Ces canaux ne seront donc pas décrits plus amplement.

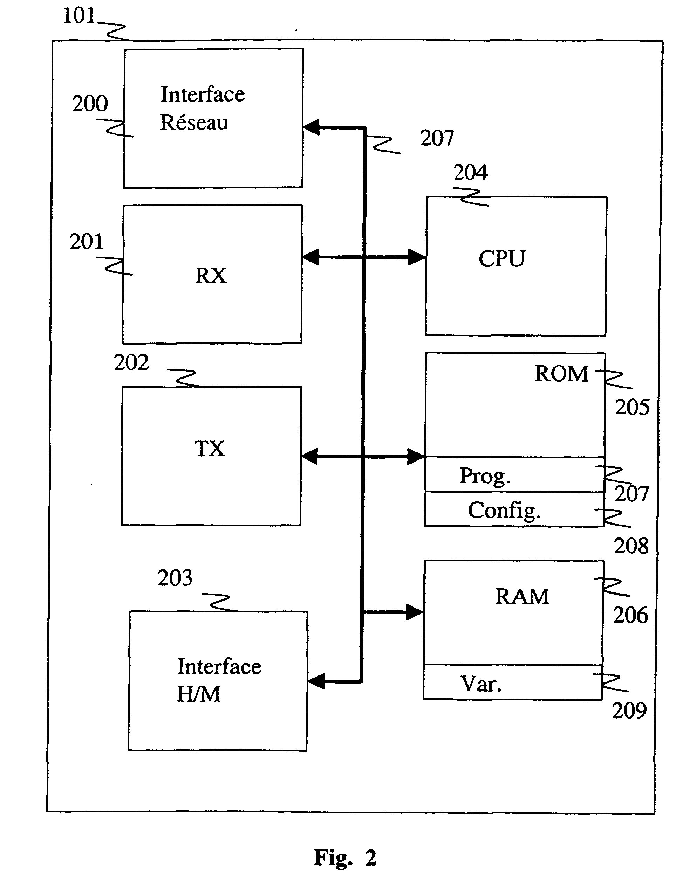

La figure 2 illustre schématiquement la station de base 101 telle qu'illustrée en regard de la figure 1.

La station de base 101 comprend, reliés entre eux par un bus d'adresses et de données 207 :
- un processeur 204 ;
- une mémoire vive 206 ;
- une mémoire non volatile 205 ;
- une interface réseau filaire 200 permettant la liaison vers une infrastucture fixe du réseau mobile ou vers d'autres réseaux (notamment la liaison 120 vers la station de base 111 du réseau 110);
- une interface radio de réception 201 permettant de recevoir les signaux émis par les terminaux présents (notamment les terminaux 102 à 104) dans la cellule 100 ;
- une interface radio d'émission 202 permettant d'émettre des signaux à destination des terminaux présents dans la cellule 100 ; et
- une interface homme/machine 203 permettant un dialogue avec la machine pour le contrôle et la maintenance.

La mémoire vive 206 conserve des données, des variables 209 et des résultats intermédiaires de traitement.

La mémoire non volatile 205 conserve dans des registres qui par commodité possèdent les mêmes noms que les données qu'ils conservent, notamment :
- le programme de fonctionnement du processeur 204 dans un registre « *prog* » 210 et
- les paramètres 211 de configuration de la station de base 101.

La station de base 110 non représentée comprend reliés entre eux par un bus d'adresses et de données :
- un processeur ;
- une mémoire vive ;
- une mémoire non volatile ;
- une interface réseau filaire permettant la liaison vers une infrastucture fixe du réseau mobile ou vers d'autres réseaux (notamment la liaison 120 vers la station de base 101);
- une interface radio d'émission permettant d'émettre des signaux à destination des terminaux présents (notamment le terminal 102) dans le réseau 110; et
- une interface homme/machine permettant un dialogue avec la machine pour le contrôle et la maintenance.

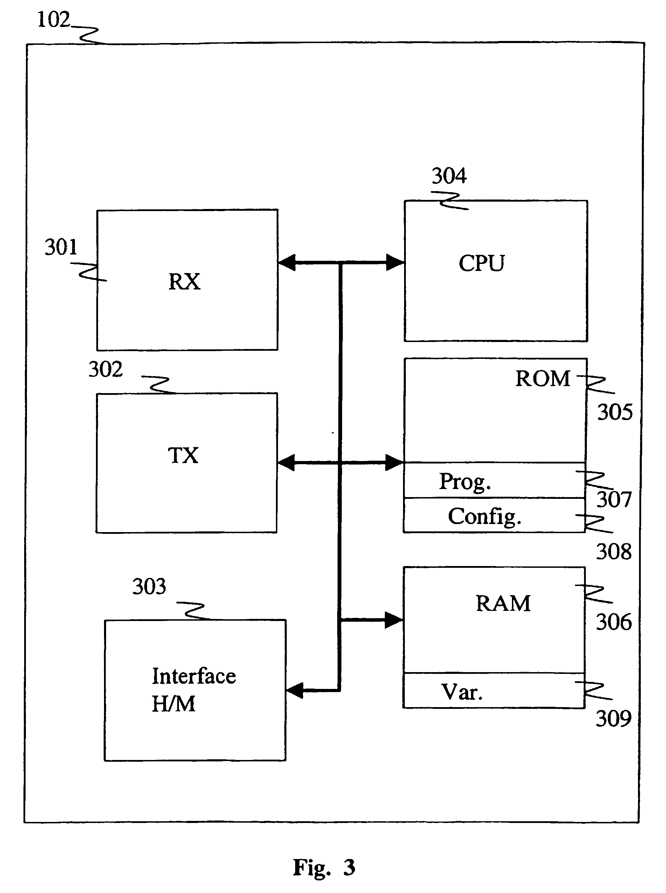

La figure 3 illustre schématiquement le terminal 102 tel qu'illustré en regard de la figure 1.

Le terminal 102 comprend, reliés entre eux par un bus d'adresses et de données 307 :
- un processeur 304 ;
- une mémoire vive 306 ;
- une mémoire non volatile 305 ;
- une interface radio de réception 301 permettant de recevoir les signaux émis par la station de base 101 UMTS et par la station de base 111 HIPERLAN/2;
- une interface radio d'émission 302 permettant d'émettre des signaux à destination la station de base 101 UMTS ; et
- une interface homme/machine 303 permettant un dialogue avec la machine pour le contrôle et la maintenance.

La mémoire vive 306 conserve des données, des variables 309 et des résultats intermédiaires de traitement.

La mémoire non volatile 305 conserve dans des registres qui par commodité possèdent les mêmes noms que les données qu'ils conservent, notamment :
- le programme de fonctionnement du processeur 304 dans un registre « *prog »* 310 et
- les paramètres 311 de configuration du terminal 102.

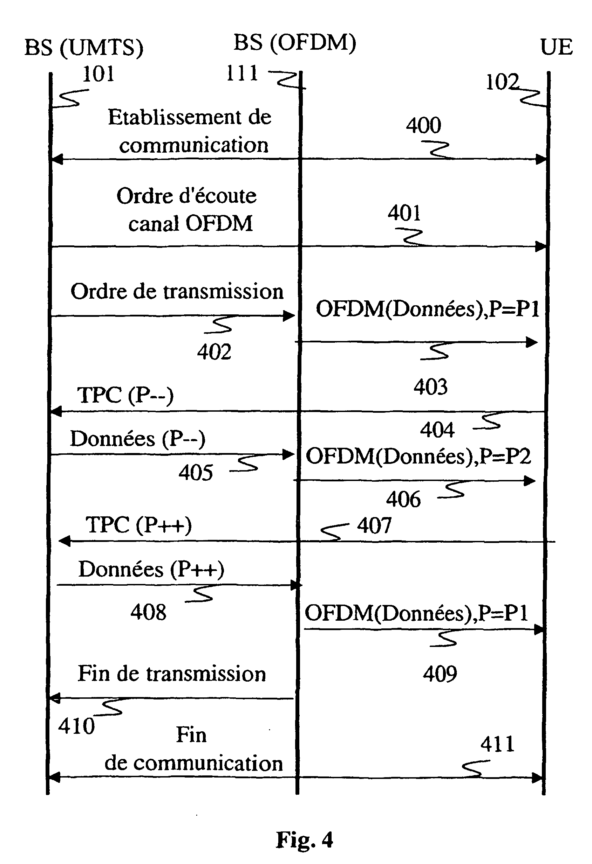

La figure 4 illustre un protocole de communication entre les stations de base 101 et 111 et le terminal 102.

Au cours d'une première étape 400, une communication selon le protocole UMTS est établie entre la station de base 101 et le terminal 102 sur les canaux descendant121 et montant 122.

Puis, la station de base 101 émet, sur le canal descendant 121 et vers le terminal 102, un ordre 401 d'écoute du canal OFDM propre à la station de base 111, par exemple, sur un canal FACH (« Forward Access Channel ») ou DCH (« Dedicated Channel ») ou DSCH («Downlink shared Channel ») ou par l'intermédiaire du champ TFCI (« Transport Format Combination Indicator») transporté par le canal DPCCH (« Dedicated Physical Control Channel »).

Ensuite, la station de base 101 émet, vers la station de base 111, un ordre de transmission des données destinées au terminal 103 sur son canal OFDM.

Puis, la station de base 111 transmet les données destinées au terminal 103 sur le canal descendant 123 en utilisant une modulation OFDM permettant un haut débit de transmission à une puissance égale à une valeur initiale P1.

Ensuite, en supposant que le terminal mesure (selon des techniques connues) une puissance reçue trop élevée, il informe la station de base 101, au cours d'une étape 404 que la station de base 111 peut diminuer sa puissance d'émission. La transmission de cette information se fait par l'intermédiaire du canal TPC en insérant parmi les données de contrôle de puissance destinées à la station de base 101 des données destinée à un autre usage, en l'occurrence des données destinées au contrôle de la puissance d'émission de la station de base 111.

Puis, au cours d'une étape 405, la station de base 101 indique, via la liaison filaire 120, à la station de base 111 qu'elle peut diminuer la puissance d'émission associées aux trames destinées au terminal 102.

Ainsi, la station de base 111 ajuste sa puissance d'émission en fonction des indications fournies par le terminal 102 via la station de base 101. La station de base 111 émet alors des données 406 destinées au terminal 103 sur le canal descendant 123 en utilisant une modulation OFDM permettant un haut débit de transmission à une puissance égale à une valeur égale à P2 inférieure à la valeur initiale P1. La station de base émet ainsi les données à destination du terminal en limitant les interférences créées par cette émission.

Puis, en supposant que le terminal mesure (selon des techniques connues) une puissance reçue trop faible, il informe la station de base 101, comme précédemment via le canal TPC, au cours d'une étape 407 que la station de base 111 doit augmenter sa puissance d'émission.

Puis, au cours d'une étape 408, la station de base 101 indique, via la liaison filaire 120, à la station de base 111 qu'elle doit augmenter la puissance d'émission associées aux trames destinées au terminal 102.

La station de base 111 émet alors des données 409 destinées au terminal 103 sur le canal descendant 123 en utilisant une modulation OFDM permettant un haut débit de transmission à une puissance égale à une valeur égale à P1 inférieure à la valeur précédente P2. La station de base émet ainsi les données à destination du terminal en optimisant la puissance d'émission de sorte que les interférences créées par cette émission soient limitées tout en permettant une bonne réception des données par le terminal 102.

Lorsque la transmission des données à haut débit est terminée, au cours d'une dernière étape 410, le terminal 102 interrompt l'écoute de la station de base 111 et un protocole d'échange 411 compatible avec la norme UMTS se met en place entre la station de base UMTS 101 et le terminal 102 pour mettre fin à la communication.

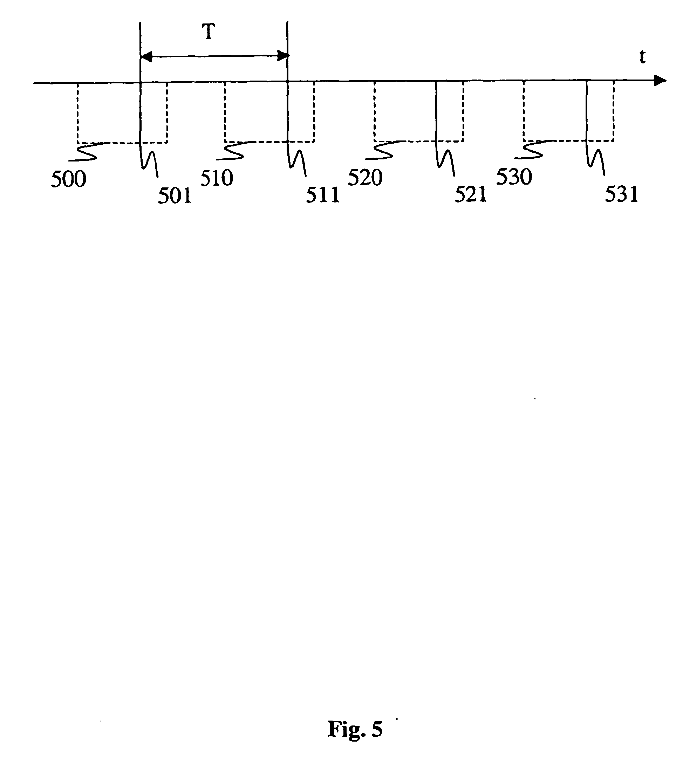

La figure 5 illustre la transmission de trames UMTS du terminal 102 vers la station de base 101.

Le terminal émet successivement et périodiquement des trames 500, 510, 520 et 530 à la station de base 111.

Ces trames permettent la transmission de bits 501, 511, 521 et 531 sur un canal TPC, selon une période égale à T.

Les bits 501, 521 et 531 sont, par exemple, des bits dédiés au contrôle de la puissance d'émission de la station de base 101.

En revanche, le bit 511 est un bit destiné à une autre finalité, par exemple, au contrôle de la puissance d'émission de la station de base 111. Ce bit pourra être identifié par la station de base 101 et traité afin de transmettre une information issue de ce traitement à la station de base 111, pour, par exemple, demander une augmentation ou une diminution de sa puissance d'émission.

D'une manière générale, les positions des bits dans le canal TPC sont prédéterminées à l'intérieur de chaque trame en fonction de leur utilisation. Ainsi, la répartition des bits est connue du terminal 102 et de la station de base 101 qui peuvent ainsi respectivement insérer et extraire les bits du canal TPC en fonction de leur signification.

Selon une variante, les positions des bits destinés à une finalité qui n'est pas le contrôle de puissance de la station de base 101 peuvent être déterminées et allouées dynamiquement en fonction des besoins, à l'aide d'un message protocolaire transmis par un autre canal de transport.

On note que, dans tous les cas, la répartition des bits à l'intérieur du canal TPC sera choisie de sorte que le contrôle de puissance de la station de base réceptrice ne soit pas ou soit le moins possible dégradé. Ainsi, les bits du canal TPC destinés à une autre finalité seront préférentiellement répartis uniformément dans ce canal, deux bits consécutifs du canal TPC n'étant pas affectés à cette autre finalité.

Bien entendu, l'invention n'est pas limitée aux exemples de réalisation mentionnés ci-dessus.

En particulier, l'homme du métier pourra apporter toute variante dans les types de réseaux mis en oeuvre. Ainsi, l'invention concerne tous les réseaux mobiles et/ou cellulaires radio, disposant d'une liaison montante permettant l'émission, par un terminal, d'un signal de contrôle de puissance par émission périodique de données comprenant des données propres au contrôle de puissance de la station réceptrice du signal et des données destinées à autre usage, par exemple, données destinées à un équipement tiers ne pouvant recevoir directement les données du terminal. Cet équipement tiers peut notamment être compatible avec une norme de type HIPERLAN/2 ou IEEE802.11, UMTS ou tout autre norme permettant le transfert de données à haut débit. Il peut s'agir, par exemple, d'une station de base, d'une station relais ou d'un terminal.

Les données destinées à un autre usage seront, par exemple, des données destinées au contrôle de la puissance d'émission de l'équipement tiers, mais également des données d'information quelconque. L'équipement tiers peut notamment mais non limitativement être adapté à transmettre des données à haut débit vers un terminal utilisant un canal TPC le liant à une station de base de réseau radio, la transmission des données se faisant ,par exemple, à l'aide d'une modulation multiporteuse de type OFDM ou IOTA (telle que définie dans la demande de brevet FR-95 05455).

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de transmission de données dans un réseau de communication radio comprenant :
- au moins une station de base (101) ; et
- au moins un terminal (102) adapté à transmettre isolément et périodiquement à une desdites au moins une station de base, dite première station de base, des informations binaires sur un canal radio montant (TPC),
**caractérisé en ce que** ledit canal radio porte :
- des premières informations (501, 521, 531) permettant une commande de puissance d'émission de ladite première station de base ; et
- des secondes informations (511) destinées à une autre finalité que ladite commande de puissance de ladite première station de base;
lesdites secondes informations (511) étant insérées parmi lesdites premières informations (501, 521, 531).

2. Procédé selon la revendication 1, **caractérisé en ce que** ladite première station de base gère au moins une cellule (100) de réseau de télécommunication mobile.

3. Procédé selon l'une quelconque des revendications 1 et 2, **caractérisé en ce que** ladite première station de base transmet à un équipement de communication (111) apte à transmettre des données audit terminal, au moins une partie desdites secondes informations reçues et **en ce que** ledit équipement de communication met en oeuvre un traitement de ladite au moins une partie desdites secondes informations.

4. Procédé selon la revendication 3, **caractérisé en ce que** lorsque ledit équipement de communication est en communication avec ledit terminal, il ajuste une puissance d'émission radio de données à destination dudit terminal en fonction du résultat dudit traitement.

5. Procédé selon l'une quelconque des revendications 3 et 4, **caractérisé en ce que** ledit équipement de communication communique avec ledit terminal sur un canal unidirectionnel (123) permettant la transmission de données dudit équipement de communication vers ledit terminal.

6. Procédé selon l'une quelconque des revendications 3 à 5, **caractérisé en ce que** ledit équipement de communication est adapté à émettre des données en utilisant une modulation à porteuses multiples (OFDM).

7. Procédé selon l'une quelconque des revendications 3 à 6, **caractérisé en ce que** ledit équipement de communication permet des communications selon un protocole compatible avec la norme HIPERLAN/2 et/ou IEEE 802.11.

8. Procédé selon l'une quelconque des revendications 3 à 7, **caractérisé en ce que** ledit équipement est une station de base (111) distincte de ladite première station de base (101).

9. Procédé selon l'une quelconque des revendications 3 à 7, **caractérisé en ce que** ledit équipement est un terminal.

10. Procédé selon l'une quelconque des revendication 1 à 9, **caractérisé en ce que** ladite autre finalité comprend un contrôle de puissance d'émission d'une station de base distincte de ladite première station de base.

11. Procédé selon l'une quelconque des revendication 1 à 10, **caractérisé en ce que** ladite autre finalité comprend un acquittement de données transmises par une station de base audit terminal sur un canal radio, ledit acquittement indiquant que les données ont été ou n'ont pas été reçues correctement par ledit terminal.

12. Procédé selon l'une quelconque des revendication 1 à 11, **caractérisé en ce que** ladite autre finalité fait partie du groupe comprenant :
- les transmissions de données à destination d'une station de base distincte de ladite première station de base ;
- les gestions d'un asservissement temporel entre une station de base et ledit terminal ;
- les gestions d'un asservissement fréquentiel entre une station de base et ledit terminal ; et
- les contrôles de flux de données à destination et/ou en provenance dudit terminal.

13. Procédé selon l'une quelconque des revendications 1 à 12, **caractérisé en ce que** la position desdites premières et secondes informations est prédéterminée.

14. Procédé selon l'une quelconque des revendications 1 à 13, **caractérisé en ce que** la position desdites premières et secondes informations est déterminée dynamiquement.

15. Procédé selon l'une quelconque des revendications 1 à 14, **caractérisé en ce que** lesdites secondes informations représentent au plus 10% desdites informations binaires.

16. Procédé selon la revendication 15, **caractérisé en ce que** lesdites secondes informations représentent au plus 1% desdites informations binaires.

17. Terminal adapté à transmettre isolément et périodiquement à une station de base de réseau de communication radio, dite première station de base, des informations binaires sur un canal radio montant (TPC),
**caractérisé en ce que** ledit terminal comprend des moyens de distinction et d'insertion parmi lesdites informations binaires :
- de premières informations permettant une commande de puissance d'émission de ladite première station de base ; et
- de secondes informations destinées à une autre finalité que ladite commande de puissance de ladite première station de base;
lesdites secondes informations étant insérées parmi lesdites premières informations.

18. Station de base de réseau cellulaire, adaptée à recevoir d'un terminal, isolément et périodiquement des informations binaires sur un canal radio montant (TPC),
**caractérisé en ce que** ladite station de base comprend des moyens de distinction et d'extraction parmi lesdites informations binaires :
- de premières informations permettant une commande de puissance d'émission de ladite station de base ; et
- de secondes informations destinées à une autre finalité que ladite commande de puissance de ladite première station de base;
lesdites secondes informations étant insérées parmi lesdites premières informations.

19. Système de communication, **caractérisé en ce qu'**il comprend au moins un terminal selon la revendication 17 et au moins une station de base selon la revendication 18.

20. Signal émis par un terminal vers une station de base de réseau de communication radio et portant des informations binaires transmises isolément et périodiquement par ledit terminal à ladite station de base sur un canal radio montant (TPC),
**caractérisé en ce que** lesdites informations binaires comprennent :
- des premières informations permettant une commande de puissance d'émission de ladite station de base ; et
- des secondes informations destinées à une autre finalité que ladite commande de puissance de ladite station de base;
lesdites secondes informations étant insérées parmi lesdites premières informations.

## Claims

1. Data transmission method in a radio communication network comprising:
- at least one base station (101); and
- at least one terminal (102) adapted to individually and periodically transmit binary information on an uplink radio channel (TPC), to at least one of the said base stations called the first base station,
wherein the said radio channel carries:
- first information (501, 521, 531) for controlling the transmission power of the said first base station; and
- second information (511) designed to a purpose other than controlling the power of the said first base station
said second information (511) being inserted among said first information (501, 521,531).

2. Method according to claim 1, wherein the said first base station manages at least one mobile telecommunication network cell (100).

3. Method according to either of claims 1 and 2, wherein the said first base station sends at least one part of the said received second information to a communication equipment (111) capable of transmitting data to the said terminal, and wherein the said communication equipment processes the said at least one part of the said second information.

4. Method according to claim 3, wherein when the said communication equipment is in communication with the said terminal equipment, it adjusts the data radio transmission power to be sent to the said terminal as a function of the result of the said processing.

5. Method according to either of claims 3 and 4, wherein the said communication equipment communicates with the said terminal on a single directional channel (123) used to transmit data from the said communication equipment to the said terminal.

6. Method according to any one of claims 3 to 5, wherein the said communication equipment is adapted to sending data using a multiple carrier modulation (OFDM).

7. Method according to any one of claims 3 to 6, wherein the said communication equipment supports communications according to a protocol compatible with the HIPERLAN/2 standard and / or the IEEE 802.11 standard.

8. Method according to any one of claims 3 to 7, wherein the said equipment is a base station (111) distinct from the said first base station (101).

9. Method according to any one of claims 3 to 7, wherein the said equipment is a terminal.

10. Method according to any one of claims 1 to 9, wherein the said other purpose comprises controlling the transmission power of a base station distinct from the said first base station.

11. Method according to any one of claims 1 to 10, wherein the said other purpose includes acknowledgement of data transmitted by a base station to the said terminal on a radio channel, the said acknowledgement indicating whether or not data were correctly received by the said terminal.

12. Method according to any one of claims 1 to 11, wherein the said other purpose belongs to the following group of purposes:
- data transmissions to a base station distinct from the said first base station;
- management of time slaving between a base station and the said terminal;
- management of frequency slaving between a base station and the said terminal; and
- control of the data flow sent to and / or from the said terminal.

13. Method according to any one of claims 1 to 12, wherein the position of the said first and second information is predetermined.

14. Method according to any one of claims 1 to 13, wherein the position of the said first and second information is determined dynamically.

15. Method according to any one of claims 1 to 14, wherein the said second information represents not more than 10% of the said binary information.

16. Method according to claim 15, wherein the said second information represents not more than 1% of the said binary information.

17. Terminal adapted to individually and periodically transmitbinary information on an uplink radio channel (TPC) to a base station called the first base station in a radio communication network,
wherein said terminal includes means of distinguishing and inserting among the said binary information:
- first information for controlling the transmission power of the said first base station; and
- second information designed to a purpose other than the said control of the power of the said first base station, said second information being inserted among said first information.

18. Base station in a cellular network, adapted to individually and periodically receive binary information on an uplink radio channel (TPC) from a terminal,
wherein said base station includes means for distinguishing and extracting among the said binary information:
- first information for controlling the transmission power of the said first base station; and
- second information designed to a purpose other than controlling the power of the said first base station, said second information being inserted among said first information.

19. Communication system wherein it includes at least one terminal according to claim 17 and at least one base station according to claim 18.

20. Signal sent by a terminal to a base station in a radio communication network and carrying binary information individually and periodically transmitted by the said terminal to the said base station, on an uplink radio channel (TPC),
wherein the said binary information includes:
- first information for controlling the transmission power of the said base station; and
- second information designed to a purpose other than said control of the power of the said base station, said second information being inserted among said first information.

## Patentansprüche

1. Verfahren zum Übertragen von Daten in einem Funkkommunikationsnetz, das folgendes umfasst:
- mindestens eine Basisstation (101) und,
- mindestens ein Terminal (102), das in der Lage ist, isoliert und periodisch zu einer der mindestens einen, erste Basisstation genannten Basisstation binäre Inforationen über einen Uplink-Funkkanal (TPC) zu senden,
**dadurch gekennzeichnet, dass** dieser Funkkanal folgendes trägt:
- erste Informationen (501, 521, 531), die das Steuern der Sendeleistung der ersten Basisstation ermöglichen, und
- zweite Informationen (511), die einem anderen Zweck als der besagten Leistungssteuerung der ersten Basisstation dienen,
wobei diese zweiten Informationen (511) zwischen den ersten Informationen (501, 521, 531) eingefügt sind.

2. Verfahren nach Anspruch 1,
**dadurch gekennzeichnet, dass** die erste Basisstation mindestens eine Zelle (100) eines mobilen Telekommunikationsnetzes verwaltet.

3. Verfahren nach einem der Ansprüche 1 oder 2,
**dadurch gekennzeichnet, dass** die erste Basisstation mindestens einen Teil der empfangenen zweiten Informationen an eine Kommunikationseinrichtung (111) sendet, die in der Lage ist, Daten an das besagte Terminal zu senden, und
dass die Kommunikationseinrichtung eine Bearbeitung dieses mindestens ersten Teils dieser zweiten Informationen einsetzt.

4. Verfahren nach Anspruch 3,
**dadurch gekennzeichnet, dass** die Kommunikationseinrichtung, wenn sie mit dem erwähnten Terminal in Verbindung ist, eine Sendefunkleistung der Daten zu diesem Terminal hin einstellt, die eine Funktion des Ergebnisses dieser Bearbeitung ist.

5. Verfahren nach einem der Ansprüche 3 oder 4,
**dadurch gekennzeichnet, dass** die Kommunikationseinrichtung mit dem Terminal über einen unidirektionalen Kanal (123) in Verbindung steht, der das Senden der Daten dieser Kommunikationseinrichtung zum erwähnten Terminal ermöglicht.

6. Verfahren nach einem der Ansprüche 3 bis 5,
**dadurch gekennzeichnet, dass** die erwähnte Kommunikationseinrichtung dazu geeignet ist, Daten zu senden, indem sie eine mehrfache Trägermodulation (OFDM) verwendet.

7. Verfahren nach einem der Ansprüche 3 bis 6,
**dadurch gekennzeichnet, dass** die Kommunikationseinrichtung Verbindungen nach einem Protokoll ermöglicht, das mit der Norm HIPERLAN/2 und/oder IEEE 802.11 kompatibel ist.

8. Verfahren nach einem der Ansprüche 3 bis 7,
**dadurch gekennzeichnet, dass** die Kommunikationseinrichtung eine von der ersten Basisstation (101) verschiedene Basisstation (111) ist.

9. Verfahren nach einem der Ansprüche 3 bis 7,
**dadurch gekennzeichnet, dass** die Kommunikationseinrichtung ein Terminal ist.

10. Verfahren nach einem der Ansprüche 1 bis 9,
**dadurch gekennzeichnet, dass** der andere Zweck eine Steuerung der Sendeleistung einer von der ersten Basisstation verschiedenen Basisstation umfasst.

11. Verfahren nach einem der Ansprüche 1 bis 10,
**dadurch gekennzeichnet, dass** der erwähnte andere Zweck eine Empfangsbestätigung der von einer Basisstation an das Terminal gesandten Daten ist, wobei diese Empfangsbestätigung angibt, ob die Daten vom Terminal ordnungsgemäß empfangen wurden oder nicht.

12. Verfahren nach einem der Ansprüche 1 bis 11,
**dadurch gekennzeichnet, dass** der erwähnte andere Zweck der folgendes umfassenden Gruppe angehört:
- Datenübertragungen zu einer von der ersten Basisstation verschiedenen Basisstation;
- die Lenkung einer vorübergehenden Rückkopplung zwischen einer Basisstation und dem erwähnten Terminal;
- die Lenkung einer Frequenzrückkoppelung zwischen einer Basisstation und dem erwähnten Terminal;
- die Steuerung des Datenflusses zu und/oder von dem erwähnten Terminal.

13. Verfahren nach einem der Ansprüche 1 bis 12,
**dadurch gekennzeichnet, dass** die Position der erwähnten ersten und zweiten Informationen vorgegeben ist.

14. Verfahren nach einem der Ansprüche 1 bis 13,
**dadurch gekennzeichnet, dass** die Position der erwähnten ersten und zweiten Informationen dynamisch bestimmt wird.

15. Verfahren nach einem der Ansprüche 1 bis 14,
**dadurch gekennzeichnet, dass** die erwähnten zweiten Informationen höchstens 10 % der erwähnten binären Informationen darstellen.

16. Verfahren nach Anspruch 15,
**dadurch gekennzeichnet, dass** die erwähnten zweiten Informationen höchstens 1 % der erwähnten binären Informationen darstellen.

17. Terminal, das in der Lage ist, isoliert und periodisch an eine erste Basisstation genannte Basisstation eines Funkkommunikationsnetzes binäre Informationen über einen Uplink-Funkkanal (TPC) zu senden,
**dadurch gekennzeichnet, dass** das besagte Terminal über Mittel verfügt, um folgendes unter den binären Informationen zu unterscheiden bzw. zwischen ihnen einzufügen:
- erste Informationen, die eine Steuerung der Sendeleistung der erwähnten ersten Basisstation ermöglichen, und
- zweite Informationen, die einem anderen Zweck als der besagten Leistungssteuerung der ersten Basisstation dienen,
wobei diese zweiten Informationen zwischen den ersten Informationen eingefügt sind.

18. Basisstation eines Zellennetzwerkes, die in der Lage ist, von einem Terminal binäre Informationen isoliert und periodisch über einen Uplink-Funkkanal (TPC) zu empfangen,
**dadurch gekennzeichnet, dass** die besagte Basisstation über Mittel verfügt, um folgendes unter den binären Informationen zu unterscheiden bzw. zu extrahieren:
- erste Informationen, die eine Steuerung der Sendeleistung der erwähnten Basisstation ermtiglichen, und
- zweite Informationen, die einem anderen Zweck als der besagten Leistungssteuerung der ersten Basisstation dienen,
wobei diese zweiten Informationen zwischen den ersten Informationen eingefügt sind.

19. Kommunikationssystem,
**dadurch gekennzeichnet, dass** es mindestens ein Terminal nach Anspruch 17 und mindestens eine Basisstation nach Anspruch 18 umfasst.

20. Signal, das von einem Terminal zu einer Basisstation eines Funkkommunikationsnetzes gesendet wird und binäre Informationen trägt, die isoliert und periodisch vom Terminal zur Basisstation über einen Uplink-Funkkanal (TPC) gesendet werden,
**dadurch gekennzeichnet, dass** diese ersten binären Informationen folgendes umfassen:
- erste Informationen, die eine Steuerung der Sendeleistung der erwähnten Basisstation ermöglichen, und
- zweite Informationen, die einem anderen Zweck als der besagten Leistungssteuerung der erwähnten Basisstation dienen,
wobei diese zweiten Informationen zwischen den ersten Informationen eingefügt sind.
